Europäisches Patentamt

European Patent Office

Office européen des brevets

(11) Numéro de publication: **0 082 790**

**A1**

## (12) DEMANDE DE BREVET EUROPEEN

(21) Numéro de dépôt: **82402352.7**

(22) Date de dépôt: **21.12.82**

(51) Int. Cl.³: **B 62 D 1/04**

(30) Priorité: **22.12.81 FR 8123944**

(43) Date de publication de la demande:
**29.06.83 Bulletin 83/26**

(84) Etats contractants désignés:
**DE GB IT**

(71) Demandeur: **ACIERS ET OUTILLAGE PEUGEOT Société
dite:**

**F-25400 Audincourt (Doubs)(FR)**

(72) Inventeur: **Basille, Michel
27 Avenue du Petit Parc
F-78620 Letang la Ville Yvelines(FR)**

(74) Mandataire: **Bloch, Robert et al,
39 avenue de Friedland
F-75008 Paris(FR)**

(54) **Volant d'automobile.**

(57) Volant d'automobile caractérisé par le fait que la jante (1) et le (ou les) bras (2) sont réalisés en une matière plastique composite comportant un noyau (3) de haut module, c'est-à-dire de grande ténacité, et une enveloppe (4) à grand allongement intimement liée au noyau.

EP 0 082 790 A1

## Volant d'automobile.

Les volants d'automobile comportent toujours une armature
métallique (aluminium coulé, acier soudé, construction
mixte, etc...) donnant la résistance et un revêtement, en
principe en matière plastique dure ou molle, conférant au
volant son volume extérieur, avec son toucher et son aspect esthétique.

Le fait que l'armature soit métallique oblige, pour satisfaire à l'exigence croissante de légèreté, c'est-à-dire
de faible poids total et faible inertie polaire, à mettre
en oeuvre une technologie spéciale d'assemblage de matériaux légers et à hautes caractéristiques mécaniques, donc
entraîne un prix de revient élevé.

La présente invention vise la réalisation d'un volant
sans armature à l'exception du moyeu et éventuellement
d'une amorce de bras, en vue d'obtenir un volant sûr et
de faible prix de revient.

Mais un volant doit répondre à certaines conditions de
ténacité, c'est-à-dire de résistance statique et à la fatigue, et de déformabilité sans rupture de choc. Or, il
se trouve que, pour respecter les conditions de ténacité,
il faut employer une matière plastique chargée, par exemple de fibres de verre, qui, alors, ne possède pas suffisamment d'allongement pour ne pas se rompre lors de l'essai de choc. Par contre, il existe des matières de grand
allongement à la rupture, mais incapables par elles-mêmes
de respecter la condition de ténacité.

L'invention a pour objet un volant qui, précisément,
concilie ces deux conditions, et qui est remarquable par
le fait que la jante et le (ou les) bras sont réalisés en une matière plastique composite comportant un noyau de haut module, c'est-à-dire de grande ténacité, et une enveloppe à grand allongement intimement liée au noyau.

La fabrication du volant selon l'invention est avantageusement effectuée par le procédé dit de "double injection", c'est-à-dire en injectant dans un même moule, d'abord la matière de l'enveloppe extérieure, puis celle du noyau.

Sur le volant selon l'invention, le noyau seul suffit à conférer la ténacité nécessaire et enveloppe, qui ne se rompt pas sous l'effet du choc, pourra contenir les éléments provenant de la rupture éventuelle du noyau.

Outre la réalisation d'un volant de faible prix de revient, le procédé de l'invention permet, en utilisant pour le noyau une matière plastique très chargée, d'obtenir, au moulage, d'une part un faible retrait, donc de faibles différences de retrait d'une zone à l'autre, assurant ainsi un bon respect de la forme, d'autre part un cycle de moulage réduit.

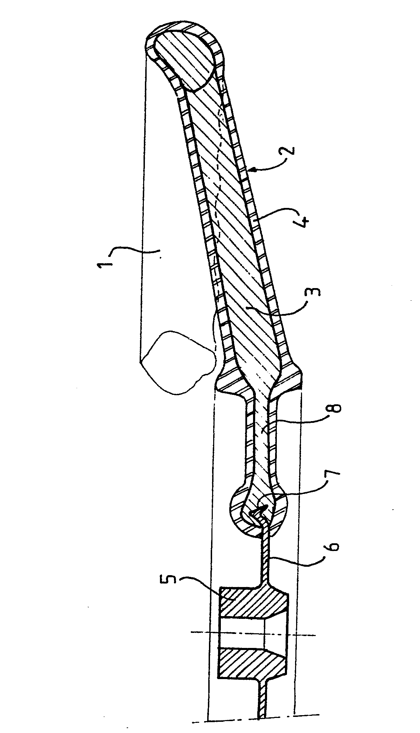

A titre nullement limitatif, on a représenté au dessin annexé un exemple de volant selon l'invention, dessin sur lequel la figure unique est une coupe axiale par un bras du volant.

Comme on le voit sur ce dessin, la jante 1 et le bras 2 sont réalisés en une matière composite comprenant un noyau 3 massif et une enveloppe 4 souple : le noyau étant réalisé en une matière plastique de haut module, c'est-à-dire de grande ténacité, et l'enveloppe 4 en matière à grand allongement, intimement liée au noyau.

Le raccordement du bras 2 au moyeu 5 s'effectue par un

3 0082790

voile mince métallique 6 ancré en 7 à l'extrémité d'un voile 8 en matière plastique composite, lui-même raccordé à l'extrémité du bras 2.

Ce raccordement assure le passage dans le moyeu, avec la transition la moins brutale possible, des charges appliquées à la jante, grâce à la déformation plastique du voile 6.

Revendication

Procédé de fabrication d'un volant d'automobile du type dans lequel la jante et le (ou les) bras sont réalisés en une matière plastique composite comportant un noyau de haut module, c'est-à-dire de grande ténacité, et une enveloppe à grand allongement intimement liée au noyau, caractérisé par le fait qu'on opère par "double injection", c'est-à-dire en injectant dans un même moule, en une seule opération, d'abord la matière de l'enveloppe extérieure, puis celle du noyau.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-4 201 830  (WOLLEN) <br> * En entier * | 1 | B 62 D    1/04 |
| | --- | | |
| A | GB-A-1 582 846  (TRW) <br> * En entier * | 1 | |
| | --- | | |
| A | GB-A-2 061 848  (NISSAN) <br> * En entier * | 1 | |
| | ----- | | |

DOMAINES TECHNIQUES RECHERCHES (Int. Cl. ³)

B 62 D

Le présent rapport de recherche a été établi pour toutes les revendications

| Lieu de la recherche | Date d'achèvement de la recherche | Examinateur |
|---|---|---|
| LA HAYE | 31-03-1983 | PIRIOU J.C. |